# EUROPEAN PATENT APPLICATION

(11) **EP 4 804 003 A1**
(43) Date of publication of application: **09.09.2026**
(21) Application number: 24896431.4
(22) Date of filing: 22.11.2024
(51) Int. Cl.: G06F 3/06

(54) **STORAGE RESOURCE MANAGEMENT METHOD, PROCESSOR, AND COMPUTER SYSTEM**

(30) Priority: 29.11.2023 CN 202311631673
(71) Applicant: Huawei Technologies Co., Ltd., Shenzhen, Guangdong 518129 (CN)
(72) Inventor: CHEN, Rujie, Shenzhen, Guangdong 518129 (CN); ZHENG, Fei, Shenzhen, Guangdong 518129 (CN)
(74) Representative: Goddar, Heinz J.
(86) International application number: PCT/CN2024/133803
(87) International publication number: WO 2025/113340

(57) **Abstract**

A storage resource management method, a processor, and a computer system are disclosed. The method is applied to the computer field. A dedicated processor includes a plurality of accelerators, a storage resource pool, and a management module, and the plurality of accelerators include a first accelerator. The method includes: The management module obtains a storage capacity required by the first accelerator, and allocates a first storage area to the first accelerator from the storage resource pool. A storage capacity of the first storage area meets the storage capacity required by the first accelerator. The first storage area is used to store data of a service that is indicated by a general-purpose processor and that is accelerated by the first accelerator. In this way, the dedicated processor can dynamically adjust, based on a storage capacity requirement of an accelerator, a storage capacity allocated to the accelerator, so that a storage resource can be flexibly configured for each accelerator in the dedicated processor, thereby improving utilization of a storage resource of the dedicated processor.

## Description

This application claims priority to Chinese Patent Application No. 202311631673.2, filed with the China National Intellectual Property Administration on November 29, 2023 and entitled "STORAGE RESOURCE MANAGEMENT METHOD, PROCESSOR, AND COMPUTER SYSTEM", which is incorporated herein by reference in its entirety.

### TECHNICAL FIELD

This application relates to the computer field, and in particular, to a storage resource management method, a processor, and a computer system.

### BACKGROUND

As a core device in the artificial intelligence field, an artificial intelligence (Artificial Intelligence, AI) chip can provide a higher computational capability than a general-purpose processor. In a design and manufacturing process of the AI chip, fixed storage space used by an accelerator needs to be manually allocated based on a computational capability and a specification of the accelerator in the AI chip, to store instructions, tasks, computing data, parameters, and the like of the accelerator. For AI chips of different types or models, designs of accelerators in the AI chips are different, and storage space used by the accelerators needs to be manually replanned. Generally, the storage space used by the accelerator in the AI chip is not easily changed during use. To ensure that the storage space allocated to the accelerator meets a storage requirement when the accelerator executes a compute task, more storage space is allocated to the accelerator. However, reserving excessive storage space results in a waste of a storage resource and low utilization of a storage resource in the AI chip.

### SUMMARY

This application provides a storage resource management method, a processor, and a computer system, to improve utilization of a storage resource in an AI chip.

According to a first aspect, a storage resource management method is provided. The method is applied to a dedicated processor. The dedicated processor includes a plurality of accelerators, a storage resource pool, and a management module, and the plurality of accelerators include a first accelerator. The method includes: The management module obtains a storage capacity required by the first accelerator, and allocates a first storage area to the first accelerator from the storage resource pool. A storage capacity of the first storage area meets the storage capacity required by the first accelerator. The first storage area is used to store data of a compute task that is indicated by a general-purpose processor and that is accelerated by the first accelerator.

Compared with a conventional solution in which before a dedicated processor is delivered from a factory, a sufficient storage capacity is manually allocated based on a computational capability and a specification of an accelerator in the dedicated processor, and a storage capacity of each accelerator in the dedicated processor is fixed, resulting in low utilization of a storage resource of the dedicated processor, the dedicated processor according to the solution provided in this application can dynamically adjust, based on a storage capacity requirement of an accelerator, a storage capacity allocated to the accelerator, so that a storage resource can be flexibly configured for each accelerator in the dedicated processor, thereby improving utilization of a storage resource of the dedicated processor.

In a possible implementation, the method further includes: updating a storage configuration record of the first accelerator based on the storage capacity of the first storage area. The storage configuration record of the first accelerator indicates a storage capacity allocated to the first accelerator.

The storage configuration record is used to record the storage capacity allocated to the accelerator. After the storage capacity of the accelerator is adjusted, the storage configuration record is updated in a timely manner, so that the storage capacity allocated to the accelerator is accurately recorded, thereby flexibly configuring a storage resource for the accelerator and improving utilization of a storage resource of the dedicated processor.

In another possible implementation, a storage area allocated to the first accelerator includes the first storage area and a second storage area; and the storage capacity of the first accelerator indicated by the storage configuration record of the first accelerator is equal to a sum of the storage capacity of the first storage area and a storage capacity of the second storage area.

In another possible implementation, the first storage area is allocated after the second storage area allocated to the first accelerator. An address of the second storage area is contiguous with an address of the first storage area.

In this way, when processing the compute task, the accelerator accesses contiguous storage areas, so that utilization of a storage resource and an access rate of the dedicated processor can be improved.

In another possible implementation, the plurality of accelerators further include a second accelerator, and the first storage area is allocated from a third storage area allocated to the second accelerator. The method further includes: updating an address that is of the third storage area and that is in a storage configuration record of the second accelerator based on the storage capacity of the first storage area, where a storage capacity of the third storage area remains unchanged.

In another possible implementation, an address of the second storage area is discontiguous with an address of the first storage area.

In this way, a storage area is allocated to an accelerator from an idle area of a storage medium, thereby improving utilization of a storage resource of the dedicated processor and avoiding changing an address of a storage area of another accelerator.

In another possible implementation, obtaining the storage capacity required by the first accelerator includes: obtaining a resource application request of the first accelerator, where the resource application request is used to indicate the storage capacity required by the first accelerator.

The resource application request actively sent by the accelerator is obtained, and the storage capacity required by the accelerator is allocated to the accelerator in a timely manner, so that a storage resource is flexibly configured for the accelerator, utilization of a storage resource of the dedicated processor is improved, and the accelerator can have a sufficient storage area to store data when processing the compute task indicated by the general-purpose processor.

In another possible implementation, obtaining the storage capacity required by the first accelerator includes: determining, based on the compute task that needs to be processed by the first accelerator and that is indicated by the general-purpose processor, the storage capacity required by the first accelerator.

The management module pre-allocates, based on the compute task that needs to be processed by the accelerator, the storage capacity required by the accelerator to the accelerator before the accelerator applies for a storage resource, to avoid that the accelerator applies for the storage resource from the management module when the accelerator needs the storage resource, which may affect a rate at which the accelerator processes the compute task. In this way, the storage resource is flexibly configured for the accelerator, utilization of a storage resource of the dedicated processor is improved, and the accelerator can have a sufficient storage area to store data when processing the compute task indicated by the general-purpose processor.

In another possible implementation, obtaining the storage capacity required by the first accelerator includes: When the first accelerator processes the compute task indicated by the general-purpose processor, the storage capacity required by the first accelerator is obtained.

When the accelerator processes the compute task indicated by the general-purpose processor, the storage capacity required by the accelerator is allocated to the accelerator in a timely manner. In this way, the storage resource is flexibly configured for the accelerator, utilization of a storage resource of the dedicated processor is improved, and the accelerator can have a sufficient storage area to store data when processing the compute task indicated by the general-purpose processor.

In another possible implementation, the storage resource pool includes a plurality of types of storage media; and allocating the first storage area to the first accelerator from the storage resource pool includes: allocating the first storage area to the first accelerator from one type of storage medium.

The plurality of types of storage media are configured in the dedicated processor, to meet a requirement of the accelerator for a storage resource, flexibly configure a storage resource for the accelerator, and improve utilization of a storage resource of the dedicated processor.

In another possible implementation, the first storage area is a storage area other than a faulty area in the storage resource pool.

When a storage medium in the dedicated processor is faulty, a storage resource can be flexibly reallocated to the accelerator, thereby improving reliability of the dedicated processor.

For example, allocating the first storage area to the first accelerator from the storage resource pool includes: allocating the first storage area to the first accelerator from the storage area other than the faulty area in the storage resource pool.

In another possible implementation, the method further includes: After the first accelerator completes execution of the compute task indicated by the general-purpose processor, the storage area allocated to the first accelerator is released.

When the accelerator completes execution of the compute task indicated by the general-purpose processor and does not use a storage resource, a storage resource allocated to the accelerator is released, so that another accelerator in the dedicated processor can use the storage resource, thereby improving utilization of a storage resource of the dedicated processor.

In another possible implementation, before obtaining the storage capacity required by a first accelerator, the method further includes: when the dedicated processor is started, a default storage configuration record of the first accelerator is updated based on a system configuration file, to obtain the storage configuration record of the first accelerator.

The default storage configuration record of the accelerator is updated based on the system configuration file, so that a storage area allocated to the accelerator meets an actual requirement for a storage resource.

According to a second aspect, a processor is provided. The processor includes modules that perform an operation step of the method according to any one of the first aspect or the possible implementations of the first aspect. For example, the processor includes a plurality of accelerators, a storage resource pool, and a management module. The plurality of accelerators include a first accelerator.

The management module is configured to obtain a storage capacity required by the first accelerator. The management module is further configured to allocate a first storage area to the first accelerator from the storage resource pool, where a storage capacity of the first storage area meets the storage capacity required by the first accelerator. The first accelerator is configured to accelerate a compute task indicated by a general-purpose processor, where the first storage area is used to store data of the compute task that is indicated by the general-purpose processor and that is accelerated by the first accelerator.

In a possible implementation, the management module is further configured to update a storage configuration record of the first accelerator based on the storage capacity of the first storage area. The storage configuration record of the first accelerator indicates a storage capacity allocated to the first accelerator.

In another possible implementation, a storage area allocated to the first accelerator includes the first storage area and a second storage area; and the storage capacity of the first accelerator indicated by the storage configuration record of the first accelerator is equal to a sum of the storage capacity of the first storage area and a storage capacity of the second storage area.

In another possible implementation, the first storage area is allocated after the second storage area allocated to the first accelerator. An address of the second storage area is contiguous with an address of the first storage area.

In another possible implementation, the plurality of accelerators further include a second accelerator, and the first storage area is allocated from a third storage area allocated to the second accelerator. The management module is further configured to update an address that is of the third storage area and that is in a storage configuration record of the second accelerator based on the storage capacity of the first storage area, where a storage capacity of the third storage area remains unchanged.

In another possible implementation, an address of the second storage area is discontiguous with an address of the first storage area.

In another possible implementation, when obtaining the storage capacity required by the first accelerator, the management module is specifically configured to obtain a resource application request of the first accelerator, where the resource application request is used to indicate the storage capacity required by the first accelerator.

In another possible implementation, when obtaining the storage capacity required by the first accelerator, the management module is specifically configured to determine, based on the compute task that needs to be processed by the first accelerator and that is indicated by the general-purpose processor, the storage capacity required by the first accelerator.

In another possible implementation, when obtaining the storage capacity required by the first accelerator, the management module is specifically configured to: when the first accelerator processes the compute task indicated by the general-purpose processor, obtain the storage capacity required by the first accelerator.

In another possible implementation, the storage resource pool includes a plurality of types of storage media. When allocating the first storage area to the first accelerator from the storage resource pool, the management module is specifically configured to allocate the first storage area to the first accelerator from one type of storage medium.

In another possible implementation, the first storage area is a storage area other than a faulty area in the storage resource pool.

In another possible implementation, the management module is further configured to: after the first accelerator completes execution of the compute task indicated by the general-purpose processor, release the storage area allocated to the first accelerator.

In another possible implementation, the management module is further configured to: when the dedicated processor is started, update a default storage configuration record of the first accelerator based on a system configuration file, to obtain the storage configuration record of the first accelerator.

According to a third aspect, a chip is provided. The chip includes a logic circuit and a power supply circuit. The power supply circuit is configured to supply power to the logic circuit. The logic circuit is configured to perform an operation step of the method according to any one of the first aspect or the possible implementations of the first aspect.

According to a fourth aspect, a computer system is provided. The computer system includes a general-purpose processor and the dedicated processor according to any one of the second aspect or the possible implementations of the second aspect. When the dedicated processor executes a group of computer instructions, an operation step of the method according to any one of the first aspect or the possible implementations of the first aspect is performed.

According to a fifth aspect, a computer system is provided. The computer system includes a plurality of computer devices, and the computer device includes a general-purpose processor and the dedicated processor according to any one of the second aspect or the possible implementations of the second aspect. When the dedicated processor executes a group of computer instructions, an operation step of the method according to any one of the first aspect or the possible implementations of the first aspect is performed.

According to a sixth aspect, a computer-readable storage medium is provided. The computer-readable storage medium stores instructions; and when the instructions are run on a computer, the computer is enabled to perform the methods according to the foregoing aspects.

For technical effect brought by any design in the second aspect to the sixth aspect, refer to the technical effect brought by the first aspect or different designs in the first aspect. Details are not described herein again.

Based on the implementations provided in the foregoing aspects, the implementations in this application may be further combined to provide more implementations.

### BRIEF DESCRIPTION OF DRAWINGS

FIG. 1 is a diagram of allocation of a storage resource of a dedicated processor according to the conventional technology;
FIG. 2 is a diagram of a computer system according to this application;
FIG. 3 is a diagram of a relationship between a general-purpose processor and a dedicated processor according to this application;
FIG. 4A to FIG. 4D are a diagram of a storage configuration table according to this application;
FIG. 5 is a schematic flowchart of a storage resource management method according to this application;
FIG. 6A and FIG. 6B are a diagram of updating a storage configuration record according to this application;
FIG. 7 is a diagram of a structure of a processor according to this application; and
FIG. 8 is a diagram of a structure of a computer system according to this application.

### DESCRIPTION OF EMBODIMENTS

For ease of understanding, main terms in this application are first explained.

**An artificial intelligence (Artificial Intelligence, AI) chip** refers to a module that is specially configured to process a large quantity of compute tasks in an artificial intelligence application, and a central processing unit (central processing unit, CPU) processes other non-compute tasks. The AI chip may also be referred to as an AI accelerator, a compute card, or a dedicated processor. A general-purpose processor may be a central processing unit (central processing unit, CPU). The AI chip mainly includes high-power compute units having a computational capability, such as a graphics processing unit (graphics processing unit, GPU), a data processing unit (data processing unit, DPU), a neural processing unit (neural processing unit, NPU), and an embedded neural-network processing unit (neural-network processing unit, NPU).

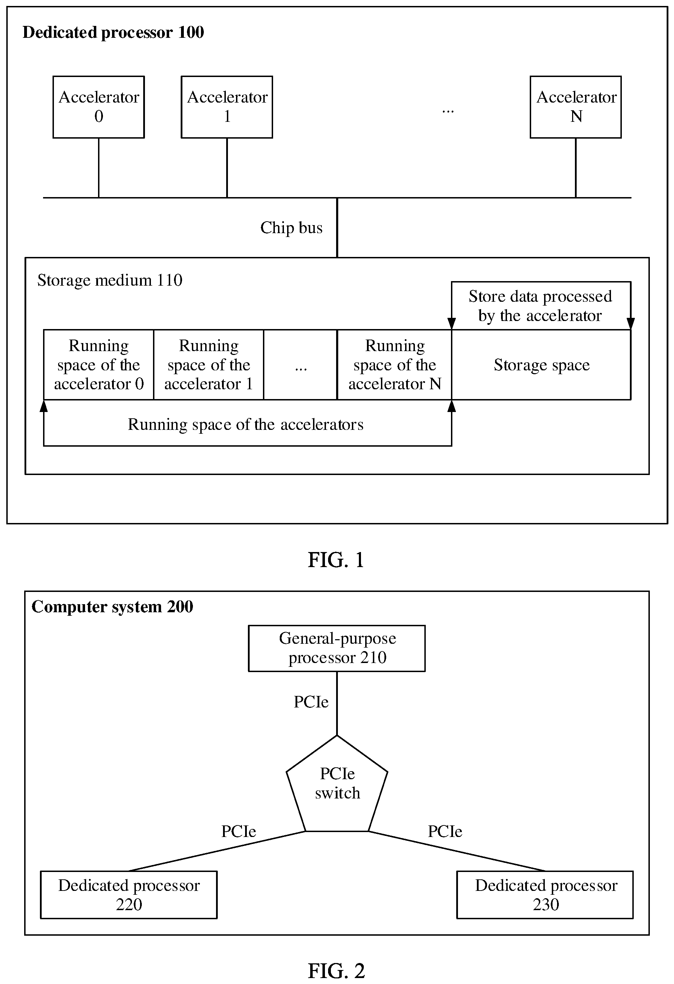

With development of dedicated processors, the dedicated processor may be a system on chip (System on Chip, SOC) including a plurality of functional modules. Each functional module independently provides a function, and a storage resource in the dedicated processor is used by the functional module. For example, the dedicated processor includes a plurality of accelerators and a storage medium. The plurality of accelerators provide one or more types of computation, for example, scalar computation, vector computation, and matrix computation. Each accelerator may use a segment of storage area in the storage medium to store data. For example, as shown in FIG. 1, a dedicated processor 100 includes n accelerators and a storage medium 110. The storage medium 110 includes running space corresponding to the n accelerators. The running space is used to store information about a task executed by the accelerator, an execution result output by the accelerator, exception information and status information output during running of the accelerator, and the like. Remaining storage space in the storage medium 110 may be used to store data in a process in which the accelerator processes a compute task.

To support a storage requirement of the accelerator, before the dedicated processor is delivered from a factory, storage areas with contiguous addresses are allocated to the accelerator from the storage medium in the dedicated processor. Storage space is allocated to the accelerator based on a computational capability of the accelerator. A stronger computational capability of the accelerator indicates a larger storage area allocated to the accelerator. In addition, to avoid an insufficient storage area when the accelerator executes the compute task, an excessive storage area may be allocated to the accelerator. Because the accelerator exclusively uses the corresponding storage area, a waste of the storage resource in the dedicated processor is caused, and utilization of the storage resource is low.

To resolve a problem that utilization of a storage resource in an AI chip is low, this application provides a storage resource management method. The method is applied to a dedicated processor. The dedicated processor includes a plurality of accelerators, a storage resource pool, and a management module, and the plurality of accelerators include a first accelerator. The method includes: The management module obtains a storage capacity required by the first accelerator, and allocates a first storage area to the first accelerator from the storage resource pool. A storage capacity of the first storage area meets the storage capacity required by the first accelerator. The first storage area is used to store data of a service that is indicated by a general-purpose processor and that is accelerated by the first accelerator.

Compared with a conventional solution in which before a dedicated processor is delivered from a factory, a sufficient storage capacity is manually allocated based on a computational capability and a specification of an accelerator in the dedicated processor, and a storage capacity of each accelerator in the dedicated processor is fixed, resulting in low utilization of a storage resource of the dedicated processor, the dedicated processor according to the solution provided in this application can dynamically adjust, based on a storage capacity requirement of an accelerator, a storage capacity allocated to the accelerator, so that a storage resource can be flexibly configured for each accelerator in the dedicated processor, thereby improving utilization of a storage resource of the dedicated processor. During design, manufacturing, and use of the dedicated processor, the storage resource can be flexibly configured for the accelerator, thereby reducing manufacturing costs of the chip and improving commercial competitiveness of the chip.

The method provided in this application is applied to a computer system including a general-purpose processor and a dedicated processor. In this case, the computer system can provide an AI accelerated computational capability, and the computer system may be applied to different AI application scenarios, for example, scenarios such as neural network inference and training.

The following describes in detail the storage resource management method provided in this application with reference to the accompanying drawings. FIG. 2 is a diagram of a computer system according to this application. As shown in FIG. 2, a computer system 200 includes a general-purpose processor 210 and a plurality of dedicated processors. The computer system 200 may be an AI server, and the AI server can provide an AI computational capability. The general-purpose processor 210 is interconnected to one or more dedicated processors in a manner like a peripheral component interconnect express (Peripheral Component Interconnect Express, PCIe) or a compute express link (compute express link, CXL). For example, the general-purpose processor 210 is separately interconnected to a dedicated processor 220 and a dedicated processor 230 by using the PCIe.

The general-purpose processor 210 may be a host (host), and the dedicated processor is used as an object controlled by the host.

The general-purpose processor 210 may be a CPU. The CPU may be a multi-core (multi-core) processor, that is, the processor includes one processor core (core) or a plurality of processor cores. The general-purpose processor 210 is configured to provide a storage allocation management function and a compute task allocation management function for the dedicated processor. The dedicated processor is configured to accelerate a compute task indicated by the general-purpose processor 210. For example, the dedicated processor performs scalar computation, vector computation, or matrix computation. The dedicated processor may perform one type of computation or may perform a plurality of types of computation. A functional module in the dedicated processor may further store data in a storage area allocated by the general-purpose processor. For ease of description, the dedicated processor 220 is used as an example for description. For another dedicated processor, refer to the description of the dedicated processor 220.

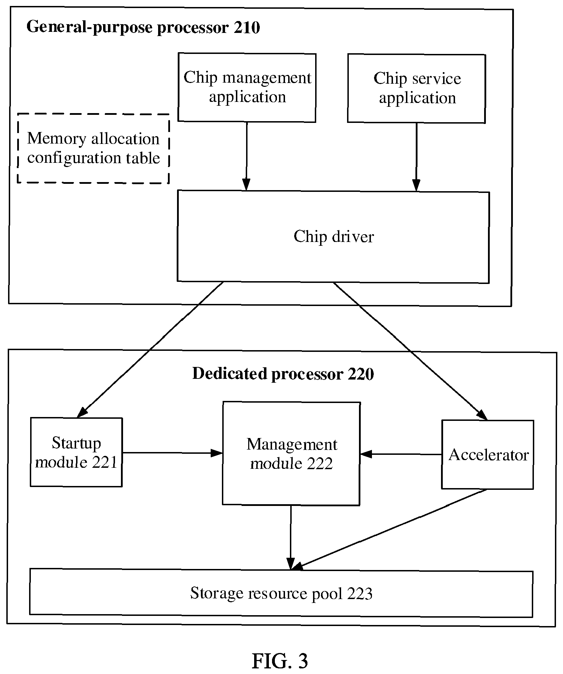

For example, as shown in FIG. 3, the general-purpose processor 210 runs a chip management application, and allocates a storage capacity to an accelerator in the dedicated processor 220 based on a system configuration file. The system configuration file is a file used to record a storage capacity allocated to a functional module in the dedicated processor. A system administrator or the computer system may set, based on an application scenario of the dedicated processor, a feature of the functional module in the dedicated processor, and the like, the storage capacity allocated to the functional module. The general-purpose processor 210 runs a chip service application and allocates a compute task to the dedicated processor 220. The general-purpose processor 210 runs a chip driver, so that the general-purpose processor 210 communicates with the dedicated processor 220.

For example, the dedicated processor 220 includes a startup module 221, a management module 222, a plurality of accelerators, and a storage resource pool 223.

The startup module 221 is configured to: when the dedicated processor 220 is powered on and started, initialize an accelerator in the dedicated processor, configure a parameter, and establish a communication connection to the general-purpose processor 210, for example, initialize a chip clock, a bus, and the storage resource pool, allocate a storage area to an accelerator in the dedicated processor, and load firmware (firmware) of the accelerator. The startup module may be a hardware module in the dedicated processor, or may be firmware.

The management module 222 is configured to allocate a storage area to each accelerator from the storage resource pool 223 based on a storage capacity required by the accelerator.

Optionally, when the dedicated processor 220 is powered on and started, the startup module 221 further obtains a system configuration file from the general-purpose processor 210, and the management module 222 allocates a storage area to each accelerator from the storage resource pool 223 based on the system configuration file.

In some embodiments, the dedicated processor 220 further stores a correspondence between an accelerator and a storage area allocated to the accelerator. For example, the management module 222 may further include a storage medium, configured to: store storage configuration records of the plurality of accelerators, and record storage areas allocated to the accelerators. The storage area may also be described as a storage capacity. A type of the storage medium in the management module 222, a storage form of the correspondence, and the like are not limited in this application.

For example, the storage medium in the management module 222 may store a storage configuration table of the dedicated processor, and the storage configuration table includes a plurality of entries. One entry indicates a storage area allocated by the management module 222 to one accelerator. A storage area indicated by one entry may be contiguous storage space. The management module 222 may create one or more entries for one accelerator. A plurality of entries of one accelerator may indicate a plurality of non-contiguous storage areas.

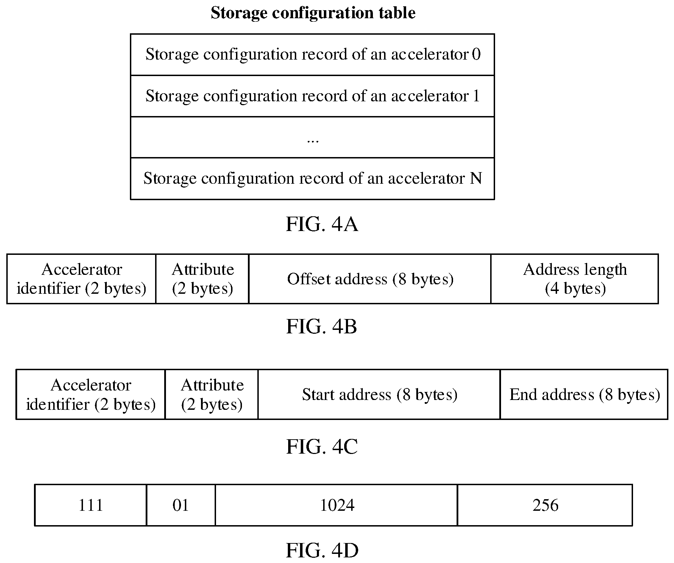

For example, FIG. 4A to FIG. 4D are a diagram of a storage configuration table according to this application. As shown in FIG. 4A, the storage configuration table includes a storage configuration record of an accelerator 0 to a storage configuration record of an accelerator N. One entry in the storage configuration table indicates a storage configuration record of one accelerator. The storage configuration record indicates address information of a storage capacity allocated to the accelerator. For a description of the address information of the storage capacity allocated to the accelerator, refer to descriptions in FIG. 4B to FIG. 4D.

As shown in FIG. 4B, a storage configuration record includes an accelerator identifier, an attribute, an offset address, and an address length.

The accelerator identifier indicates an accelerator in the dedicated processor. Each accelerator in the dedicated processor has a different accelerator identifier, and one accelerator identifier uniquely indicates one accelerator. A length of the accelerator identifier may be 2 bytes. The accelerator identifier may also be referred to as a module identifier (token).

The attribute indicates information about a storage medium to which a storage area allocated to the accelerator belongs. The attribute includes a storage medium type and an access attribute of the storage area. A length of the attribute may be 2 bytes.

The storage medium type may be a type of a physical granular medium in the storage medium, for example, a high bandwidth memory (High Bandwidth Memory, HBM), a DDR, a static random access memory (static random access memory, SRAM), or a flash memory (flash), or may be a type defined by a designer of the dedicated processor. For example, one HBM storage medium is divided into three partitions for use by an accelerator, and each partition may be named as a storage medium type.

The access attribute indicates secure access space of the storage area or non-secure access space of the storage area.

The offset address refers to an offset position of a start physical address of the storage medium to which the storage area belongs. A length of the offset address may be 8 bytes.

The address length refers to a size of a storage area. A length of the address length may be 4 bytes.

A manner of recording the size of the storage area is not limited in this application. As shown in FIG. 4B, the size of the storage area is recorded by using the offset address and the address length. The size of the storage area may alternatively be recorded by using a start address and an end address. For example, as shown in FIG. 4C, a storage configuration record includes an accelerator identifier, an attribute, a start address, and an end address. The start address refers to a start position of a storage area in a storage medium. The end address refers to an end position of the storage area in the storage medium.

For example, FIG. 4D shows a storage configuration record with an accelerator identifier being 111. An attribute is 01, and 01 indicates an HBM. An offset address is 1024, and a start address of the HBM is 0XAAAAA. An address length is 256. The storage configuration record indicates that a 256-byte storage area is occupied starting from a 0XAAAAA+1024 address allocated to the accelerator 111 from the HBM.

The accelerator is configured to accelerate a compute task indicated by the general-purpose processor 210. The accelerator may perform scalar computation, vector computation, matrix computation, and the like. The storage area of the accelerator is configured to store data of the compute task that is indicated by the general-purpose processor 210 and that is accelerated by the accelerator. The accelerator is a hardware module that can access a storage medium and perform scalar computation, vector computation, and matrix computation.

The plurality of accelerators included in the dedicated processor 220 may perform one type of computation or may perform a plurality of types of computation. For example, the dedicated processor 220 includes an accelerator for performing scalar computation, an accelerator for performing vector computation, and an accelerator for performing matrix computation.

The storage resource pool 223 includes a plurality of types of storage media. For example, the storage resource pool includes a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage resource pool 223 is configured to store instructions of the accelerator, a compute task, data and parameters required for computing, and the like.

The architectures shown in FIG. 2 and FIG. 3 are examples for description, and a quantity of components or devices in the system is not limited. For example, a quantity of accelerators may be determined based on a service requirement.

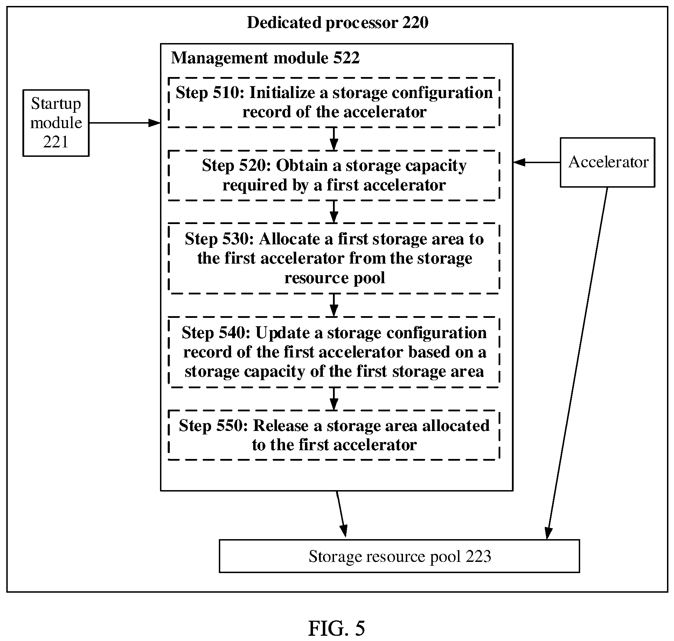

The following describes, with reference to the accompanying drawings, a procedure of the storage resource management method provided in this application, as shown in FIG. 5. Herein, an example in which the dedicated processor 220 shown in FIG. 3 dynamically adjusts a storage capacity of an accelerator, and the accelerator processes a compute task indicated by the general-purpose processor 210 is used for description.

### Step 510: A management module initializes a storage configuration record of an accelerator.

In a production and manufacturing process of the dedicated processor, a default storage configuration record is configured for the dedicated processor. The default storage configuration record indicates default storage areas corresponding to a plurality of accelerators in the dedicated processor. The default storage area corresponding to the accelerator may be configured based on a computational capability and a specification of the accelerator.

In some embodiments, when the general-purpose processor functions as a host and controls the dedicated processor, the general-purpose processor may obtain computational capabilities and specifications of the plurality of accelerators in the dedicated processor. The general-purpose processor may set, based on an application scenario of the dedicated processor, the computational capability and specification of the accelerator, and the like, a storage area allocated to the accelerator, to obtain a system configuration file. Alternatively, a system administrator sets, based on an application scenario of the dedicated processor, the computational capability and specification of the accelerator, and the like, a storage area allocated to the accelerator, to obtain a system configuration file. The system configuration file indicates an initial storage configuration record of the accelerator. For a format of the initial storage configuration record and a format of the default storage configuration record, refer to the foregoing description of the storage configuration record in FIG. 4A to FIG. 4D. Details are not described again.

The storage area allocated by the general-purpose processor to the accelerator may be the same as or different from the default storage area of the accelerator.

For example, a type of a storage medium to which the storage area allocated to the accelerator belongs is different from a type of a storage medium to which the default storage area of the accelerator belongs. The storage medium to which the storage area allocated by the general-purpose processor to the accelerator belongs may be a storage medium with a high access rate, thereby increasing efficiency of processing a compute task by the accelerator.

For another example, a size of the storage area allocated to the accelerator is different from a size of the default storage area of the accelerator.

In some other embodiments, when the dedicated processor is started, the management module may initialize a default storage configuration record of each accelerator in the dedicated processor.

For example, the management module obtains the system configuration file from the general-purpose processor in a data migration manner like direct memory access (Direct Memory Access, DMA), and initializes default storage configuration records of the plurality of accelerators in the dedicated processor based on the system configuration file, to obtain storage configuration records of the accelerators.

The management module parses the system configuration file to obtain an initial storage configuration table of the accelerator, and compares the initial storage configuration table with a default storage configuration table. The initial storage configuration table includes initial storage configuration records of the plurality of accelerators. The default storage configuration table includes the default storage configuration records of the plurality of accelerators.

If the initial storage configuration table is the same as the default storage configuration table, the default storage configuration table does not need to be modified, and the default storage configuration table is used as a storage configuration table of the dedicated processor. If the initial storage configuration table is different from the default storage configuration table, the default storage configuration table is updated with the initial storage configuration table, to obtain a storage configuration table of the dedicated processor. For example, the default storage configuration table includes a default storage configuration record of a first accelerator, a storage area of the default storage configuration record of the first accelerator is different from a storage area of an initial storage configuration record, and the storage area of the default storage configuration record of the first accelerator is updated with the storage area of the initial storage configuration record of the first accelerator. For another example, the default storage configuration table does not include a default storage configuration record of a first accelerator, and an initial storage configuration record of the first accelerator is added to the default storage configuration table. After the initialization is completed, the default storage configuration table includes storage configuration records of all accelerators in the dedicated processor.

It should be noted that method steps in embodiments are not limited in this application. For example, when the dedicated processor is started, the management module may perform the initialization operation or may not perform the initialization operation, and step 510 is an optional step.

The following describes a storage resource management process by using the first accelerator in the dedicated processor as an example. The first accelerator is any one of the plurality of accelerators in the dedicated processor.

### Step 520: The management module obtains a storage capacity required by the first accelerator.

In some embodiments, the management module receives a resource application request sent by the first accelerator (step 521), and allocates a storage area to the first accelerator based on the storage capacity required by the first accelerator and indicated by the resource application request.

In some other embodiments, the management module determines, based on a compute task that needs to be processed by the first accelerator and that is indicated by the general-purpose processor, the storage capacity required by the first accelerator (step 522). For example, the first accelerator needs to perform matrix computation. Because the matrix computation has a large computation amount and requires a large storage capacity, the storage area may be allocated to the first accelerator based on the storage capacity required by the matrix computation.

An occasion on which the management module allocates the storage area to the first accelerator is not limited in this application.

For example, during initialization of the dedicated processor, before the compute task indicated by the general-purpose processor is processed, the management module obtains the storage capacity required by the first accelerator, and allocates the storage area to the first accelerator. For another example, in a process in which the first accelerator processes the compute task indicated by the general-purpose processor, the management module obtains the storage capacity required by the first accelerator, and allocates the storage area to the first accelerator. For another example, the management module obtains a task indication of the general-purpose processor, to indicate the compute task that needs to be processed by the first accelerator. The management module obtains the storage capacity required by the first accelerator, and allocates the storage area to the first accelerator.

### Step 530: The management module allocates a first storage area to the first accelerator from a storage resource pool.

In some embodiments, the management module does not need to pay attention to a storage area that has been allocated to the first accelerator. After obtaining the storage capacity required by the first accelerator, the management module allocates the first storage area to the first accelerator from the storage resource pool based on the storage capacity required by the first accelerator.

For example, if a size of the storage area that has been allocated to the first accelerator is 10 megabytes (Megabytes, MB), the storage capacity required by the first accelerator is 10 MB, and a size of the first storage area that is allocated to the first accelerator by the management module is 10 MB, a size of the storage area allocated to the first accelerator is 20 MB.

In some other embodiments, the management module obtains the storage capacity required by the first accelerator, and determines whether a storage area that has been allocated to the first accelerator meets the storage capacity required by the first accelerator. If the storage area that has been allocated to the first accelerator meets the storage capacity required by the first accelerator, the first storage area may not be allocated to the first accelerator from the storage resource pool. Optionally, the management module may feed back the storage area that has been allocated to the first accelerator to the first accelerator. If the storage area that has been allocated to the first accelerator does not meet the storage capacity required by the first accelerator, the first storage area is allocated to the first accelerator from the storage resource pool.

For example, a size of the storage area that has been allocated to the first accelerator is 20 MB. If the storage capacity required by the first accelerator is 10 MB, a storage area may not be allocated to the first accelerator from the storage resource pool. If the storage capacity required by the first accelerator is 30 MB, and a size of the first storage area that is allocated to the first accelerator by the management module is 10 MB, a size of the storage area allocated to the first accelerator is 30 MB.

The first storage area is used to store data of the compute task that is indicated by the general-purpose processor and that is accelerated by the first accelerator. A storage capacity of the first storage area meets the storage capacity required by the first accelerator. It may be understood that the storage capacity allocated by the management module to the first accelerator may be equal to or greater than the storage capacity required by the first accelerator. For example, the storage capacity of the first storage area is equal to the storage capacity required by the first accelerator. For another example, the storage capacity of the first storage area is greater than the storage capacity required by the first accelerator.

In some other embodiments, the storage resource pool includes a plurality of types of storage media, for example, an HBM, a DDR, an SRAM, or a flash memory. The management module allocates the first storage area to the first accelerator from one type of storage medium. For example, the resource application request sent by the first accelerator includes a storage medium type, and the management module allocates the first storage area to the first accelerator from the storage medium indicated by the storage medium type.

In some other embodiments, the management module records a storage fault table, and the storage fault table is used to record a faulty area in the storage resource pool in the dedicated processor. For example, the storage fault table indicates a quantity of faulty areas, and a faulty area identifier, a start address, and an address length of each faulty area.

The management module allocates the first storage area to the first accelerator from a storage area other than the faulty area in the storage resource pool. The first storage area is a storage area other than the faulty area in the storage resource pool. For example, the management module compares an offset address of the first storage area with start addresses of a plurality of faulty areas, and compares an address length of the first storage area with address lengths of the plurality of faulty areas. If the first storage area is within the faulty area or a part of the first storage area is within the faulty area, the management module allocates the first storage area to the first accelerator from the storage area other than the faulty area in the storage resource pool, and updates at least one of an attribute, an offset address, and an address length of a storage medium to which the first storage area belongs.

### Step 540: The management module updates a storage configuration record of the first accelerator based on the storage capacity of the first storage area.

As described in the foregoing embodiment, the management module may store the storage configuration record of the first accelerator, and the storage configuration record of the first accelerator indicates a storage capacity allocated to the first accelerator. Alternatively, it may be described as that the storage configuration record of the first accelerator indicates the storage area allocated to the first accelerator. The management module may query the storage configuration table based on a first accelerator identifier, to obtain the storage configuration record of the first accelerator. The storage configuration record of the first accelerator includes the first accelerator identifier, an attribute, an offset address, and an address length. The first accelerator identifier indicates the first accelerator. The offset address and the address length indicate the storage area that has been allocated to the first accelerator. The attribute indicates a type of a storage medium to which the storage area belongs. The management module may obtain the first accelerator identifier indicated by the resource application request of the first accelerator. The management module may obtain the first accelerator identifier indicated by the general-purpose processor.

The management module updates at least one of the attribute, the offset address, and the address length in the storage configuration record of the first accelerator based on the storage capacity of the first storage area. The storage area that is allocated to the first accelerator and that is indicated by the storage configuration record of the first accelerator includes at least one storage area that is allocated to the first accelerator.

For example, the storage configuration record of the first accelerator indicates a second storage area allocated to the first accelerator. The management module allocates the first storage area to the first accelerator, that is, the storage area allocated to the first accelerator includes the first storage area and the second storage area. The storage configuration record of the first accelerator indicates the first storage area and the second storage area. The storage capacity of the first accelerator indicated by the storage configuration record of the first accelerator is equal to a sum of the storage capacity of the first storage area and a storage capacity of the second storage area. The first storage area and the second storage area are used to store the data of the compute task that is indicated by the general-purpose processor and that is accelerated by the first accelerator.

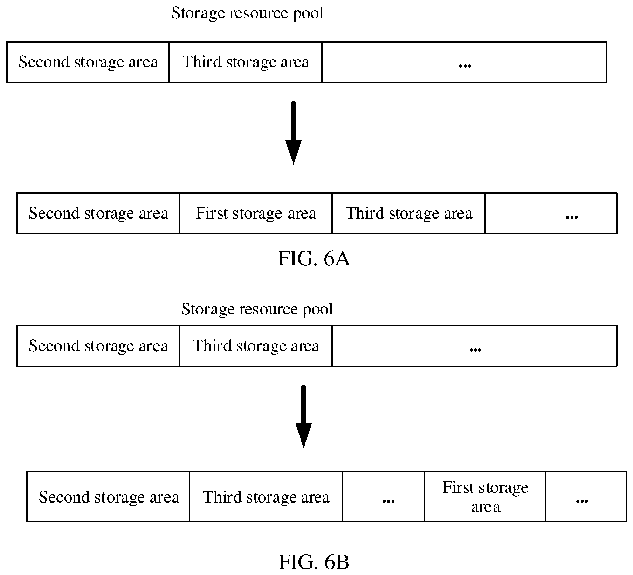

As shown in FIG. 6A, the management module may allocate, from the storage resource pool, the first storage area whose address is contiguous with an address of the second storage area. The management module may update the address length in the storage configuration record of the first accelerator. Based on an address length that is of the second storage area and that is in the storage configuration record of the first accelerator, the management module may increase the address length in the storage configuration record of the first accelerator based on the storage capacity of the first storage area. The address of the second storage area is contiguous with an address of the first storage area.

A storage capacity indicated by an address length added to the storage configuration record of the first accelerator meets the storage capacity required by the first accelerator. Alternatively, the sum of the storage capacity of the first storage area and the storage capacity of the second storage area meets the storage capacity required by the first accelerator.

In addition, the storage configuration record of the first accelerator indicates a third storage area that is allocated to a second accelerator and that is adjacent to the second storage area, and the management module allocates the first storage area from the third storage area allocated to the second accelerator. The management module updates an offset address of the third storage area in a storage configuration record of the second accelerator based on the storage capacity of the first storage area, that is, the management module increases the offset address of the third storage area based on the storage capacity of the first storage area. It may be understood that the address length of the first storage area is added to the offset address of the third storage area, and an address length in the storage configuration record of the second accelerator remains unchanged, that is, a storage capacity of the third storage area remains unchanged. The third storage area is used to store data of a compute task that is indicated by the general-purpose processor and that is accelerated by the second accelerator.

As shown in FIG. 6B, the management module may allocate the first storage area to the first accelerator from an idle storage area in the storage resource pool. The management module may update the storage configuration record of the first accelerator. To be specific, the management module adds an entry to the storage configuration table, to indicate the first storage area allocated by the management module to the first accelerator. The added entry indicates the attribute, the offset address, and the address length of the storage medium to which the first storage area of the first accelerator belongs. The offset address and the address length indicate the first storage area that has been allocated to the first accelerator. The address of the second storage area is discontiguous with an address of the first storage area.

Optionally, the resource application request further indicates the storage medium type. The management module determines whether a storage medium type indicated by the attribute in the storage configuration record of the first accelerator is the same as the storage medium type indicated by the resource application request. If the storage medium type indicated by the attribute is the same as the storage medium type indicated by the resource application request, the attribute in the storage configuration record of the first accelerator may not need to be modified. If the storage medium type indicated by the attribute is different from the storage medium type indicated by the resource application request, the storage medium type indicated by the attribute in the storage configuration record of the first accelerator is updated based on the storage medium type indicated by the resource application request, and the first storage area is allocated to the first accelerator from the storage medium indicated by the attribute.

### Step 550: The management module releases the storage area allocated to the first accelerator.

After the first accelerator completes execution of the compute task indicated by the general-purpose processor, the management module releases the storage area allocated to the first accelerator. The management module may release a part or all of the storage areas allocated to the first accelerator.

In some embodiments, the first accelerator may send the resource release request to the management module, where the resource release request includes the first accelerator identifier and the storage capacity. The resource release request may further include the offset address and the address length. The management module releases a corresponding storage area based on the offset address and the address length that are indicated by the resource release request.

In some other embodiments, the management module further stores a storage usage table, where the storage usage table indicates a size and usage of a storage area allocated to each accelerator. The management module may query the storage usage table, and release, based on the size and usage of the storage area of the accelerator recorded in the storage usage table, the storage area allocated to the accelerator.

For example, the management module queries the storage usage table to obtain usage of the storage area allocated to the first accelerator. After the first accelerator completes execution of the compute task indicated by the general-purpose processor, the storage area allocated to the first accelerator may be idle, and the management module releases the storage area allocated to the first accelerator. For example, the management module may query the storage configuration table based on the first accelerator identifier, obtain the storage configuration record of the first accelerator, and delete the storage configuration record of the first accelerator.

In addition, the management module may further update a storage configuration record corresponding to another accelerator in the storage configuration table, and update an offset address allocated to the another accelerator.

According to the storage resource management method provided in this application, the dedicated processor can dynamically adjust, based on a storage capacity requirement of an accelerator, a storage capacity allocated to the accelerator, so that a storage resource can be flexibly configured for each accelerator in the dedicated processor, thereby improving utilization of a storage resource of the dedicated processor. In addition, when a storage medium in the dedicated processor is faulty, a storage resource can be flexibly reallocated to the accelerator, so that a faulty area is not allocated to the accelerator from the storage medium, thereby improving reliability of the dedicated processor. During design, manufacturing, and use of the dedicated processor, the storage resource can be flexibly configured for the accelerator, thereby reducing manufacturing costs of the chip and improving commercial competitiveness of the chip.

It may be understood that, to implement the functions in the foregoing embodiments, the dedicated processor includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

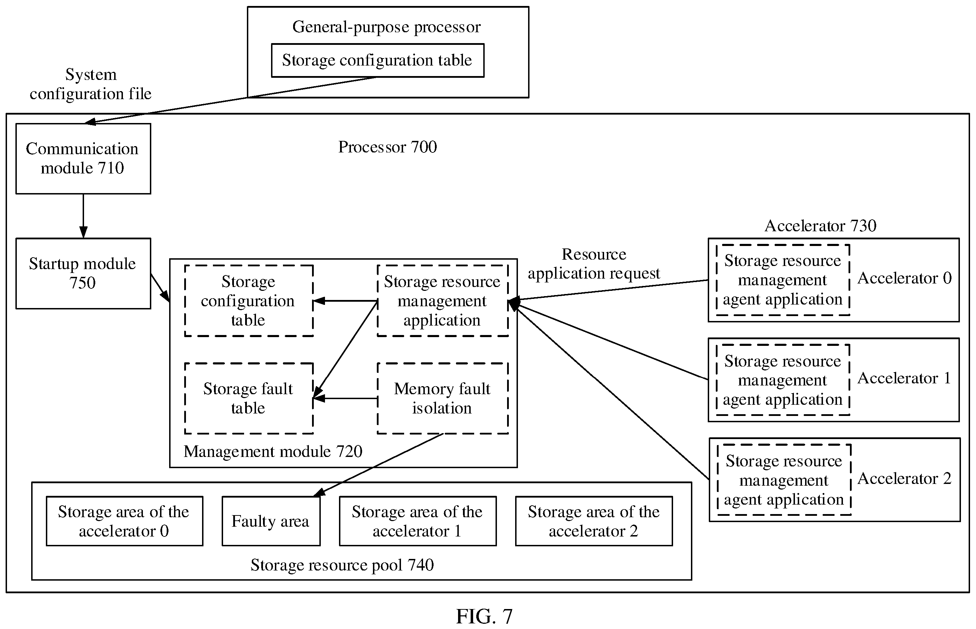

The storage resource management method provided in embodiments is described above in detail with reference to FIG. 1 to FIG. 6A and FIG. 6B. The following describes, with reference to FIG. 7, a processor provided in embodiments.

FIG. 7 is a diagram of a structure of a possible processor according to an embodiment. These processors may be configured to implement a function of the dedicated processor in the foregoing method embodiments, and therefore can also implement beneficial effect of the foregoing method embodiments. In this embodiment, the processor may be the dedicated processor shown in FIG. 5, or may be a module (for example, a chip) used in the processor.

As shown in FIG. 7, a processor 700 includes a communication module 710, a management module 720, an accelerator 730, and a storage resource pool 740. The processor 700 is configured to implement a function of the dedicated processor in the method embodiment shown in FIG. 5.

The communication module 710 is configured to obtain a system configuration file from a general-purpose processor. The management module 720 is configured to update a default storage configuration record of a first accelerator based on the system configuration file, to obtain a storage configuration record of the first accelerator.

The management module 720 is configured to obtain a storage capacity required by the first accelerator. For example, the management module 720 is configured to perform step 520 in FIG. 5.

The management module 720 is further configured to allocate a first storage area to the first accelerator from the storage resource pool, where a storage capacity of the first storage area meets the storage capacity required by the first accelerator. For example, the management module 720 is configured to perform step 530 in FIG. 5.

The management module 720 is further configured to update the storage configuration record of the first accelerator based on the storage capacity of the first storage area. For example, the management module 720 is configured to perform step 540 in FIG. 5.

The management module 720 is further configured to release a storage area allocated to the first accelerator. For example, the management module 720 is configured to perform step 550 in FIG. 5.

The accelerator 730 is configured to send a resource application request to the management module 720, to request the storage capacity required by the first accelerator.

The accelerator 730 is further configured to accelerate a compute task indicated by the general-purpose processor, where the first storage area is used to store data of the compute task that is indicated by the general-purpose processor and that is accelerated by the first accelerator.

The accelerator 730 runs a storage resource management agent application to implement the functions of the accelerator 730.

The management module 720 runs a storage resource management application to implement the functions of the management module 720. The management module 720 may further run a memory fault isolation application, to implement a function of isolating a faulty area in the storage resource pool by the management module 720.

The management module 720 further stores a storage configuration table and a storage fault table.

The storage resource pool 740 is configured to store instructions of the accelerator, a compute task, data of a compute task that is indicated by the general-purpose processor and that is accelerated by the accelerator, and the like, so that the accelerator 730 processes the compute task.

Optionally, the processor 700 may further include a startup module 750. The startup module 750 is configured to: when the processor 700 is powered on and started, initialize an accelerator in the processor 700, configure a parameter, and establish a communication connection to the general-purpose processor.

It should be understood that the processor 700 in this embodiment of this application may be implemented by using an application-specific integrated circuit (application-specific integrated circuit, ASIC), or may be implemented by using a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, the storage resource management method shown in FIG. 5 may be implemented by using software, and each module thereof may be a software module. The processor 700 and each module thereof may also be software modules.

The processor 700 according to this embodiment of this application may correspondingly perform the method described in embodiments of this application. In addition, the foregoing and other operations and/or functions of the units in the processor 700 are separately intended to implement corresponding procedures of the methods in FIG. 5. For brevity, details are not described herein again.

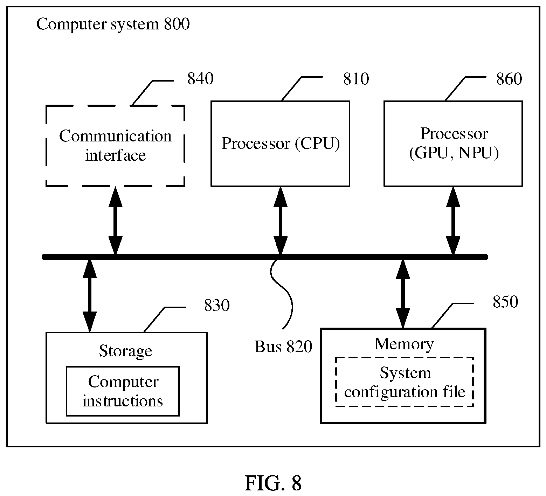

FIG. 8 is a diagram of a structure of a computer system 800 according to this application. As shown in FIG. 8, the computer system 800 includes a processor 810, a bus 820, a storage 830, a communication interface 840, a memory 850 (which may also be referred to as a main memory (main memory) unit), and a processor 860. The processor 810, the processor 860, the storage 830, the memory 850, and the communication interface 840 are connected to each other through the bus 820.

It should be understood that, in this embodiment, the processor 810 may be a CPU, or the processor 810 may be another general-purpose processor, a digital signal processor (digital signal processor, DSP), an ASIC, an FPGA or another programmable logic device, a discrete gate or transistor logic device, a discrete hardware component, or the like. The general-purpose processor may be a microprocessor, any conventional processor, or the like.

The computer system 800 may further include a graphics processing unit (graphics processing unit, GPU), a neural-network processing unit (neural-network processing unit, NPU), a microprocessor, an ASIC, or one or more integrated circuits configured to control program execution of the solutions in this application. For example, the processor 860 may be a GPU or an NPU. In this application, the processor 860 may correspond to the processor 700 in embodiments, and may correspond to a corresponding entity that performs any method in FIG. 5. In addition, the foregoing and other operations and/or functions of the modules in the processor 700 are separately intended to implement corresponding procedures of the methods in FIG. 5. For brevity, details are not described herein again.

The communication interface 840 is configured to implement communication between the computer system 800 and an external device or component.

The bus 820 may include a path for transmitting information between the foregoing components (for example, the processor 810, the memory 850, and the storage 830). In addition to a data bus, the bus 820 may further include a power bus, a control bus, a status signal bus, and the like. However, for clear description, various types of buses in the figure are marked as the bus 820. The bus 820 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like. The bus 820 may be classified into an address bus, a data bus, a control bus, and the like.

In an example, the computer system 800 may include a plurality of processors. The processor may be a multi-core (multi-CPU) processor. The processor herein may be one or more devices, circuits, and/or compute units configured to process data (for example, computer program instructions).

It should be noted that, in FIG. 8, only an example in which the computer system 800 includes one processor 810 and one storage 830 is used. Herein, the processor 810 and the storage 830 each indicate a type of component or device. In a specific embodiment, a quantity of components or devices of each type may be determined based on a service requirement.

The memory 850 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 850 may store a system configuration file.

The storage 830 may correspond to the foregoing method embodiments and is configured to store a system configuration file, for example, a hard disk drive or solid-state drive.

The computer system 800 may be a general-purpose device or a dedicated device. For example, the computer system 800 may be an edge device (for example, a box carrying a chip having a processing capability). Optionally, the computer system 800 may alternatively be a server or another device having a computational capability.

This application further provides a computer system. The computer system includes a plurality of computer devices. The computer device includes a general-purpose processor and a dedicated processor. The dedicated processor is configured to perform operation steps of the methods in the foregoing embodiments. The computer system may be a heterogeneous system, and the computer device may be a heterogeneous server.

The method steps in embodiments may be implemented in a hardware manner, or may be implemented in a manner of executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a compute device. Certainly, the processor and the storage medium may alternatively exist in the compute device as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A storage resource management method, wherein the method is applied to a dedicated processor; the dedicated processor comprises a plurality of accelerators, a storage resource pool, and a management module, and the plurality of accelerators comprise a first accelerator; and the method comprises:
obtaining, by the management module, a storage capacity required by the first accelerator; and
allocating, by the management module, a first storage area to the first accelerator from the storage resource pool, wherein a storage capacity of the first storage area meets the storage capacity required by the first accelerator, and the first storage area is used to store data of a compute task that is indicated by a general-purpose processor and that is accelerated by the first accelerator.

2. The method according to claim 1, wherein the method further comprises:
updating a storage configuration record of the first accelerator based on the storage capacity of the first storage area, wherein the storage configuration record of the first accelerator indicates a storage capacity allocated to the first accelerator.

3. The method according to claim 2, wherein a storage area allocated to the first accelerator comprises the first storage area and a second storage area; and
the storage capacity of the first accelerator indicated by the storage configuration record of the first accelerator is equal to a sum of the storage capacity of the first storage area and a storage capacity of the second storage area.

4. The method according to claim 3, wherein an address of the second storage area is contiguous with an address of the first storage area.

5. The method according to claim 4, wherein the plurality of accelerators further comprise a second accelerator, and the first storage area is allocated from a third storage area allocated to the second accelerator; and the method further comprises:
updating an address that is of the third storage area and that is in a storage configuration record of the second accelerator based on the storage capacity of the first storage area, wherein a storage capacity of the third storage area remains unchanged.

6. The method according to claim 3, wherein an address of the second storage area is discontiguous with an address of the first storage area.

7. The method according to any one of claims 1 to 6, wherein obtaining the storage capacity required by the first accelerator comprises:
obtaining a resource application request of the first accelerator, wherein the resource application request is used to indicate the storage capacity required by the first accelerator.

8. The method according to any one of claims 1 to 6, wherein obtaining the storage capacity required by the first accelerator comprises:
determining, based on the compute task that needs to be processed by the first accelerator and that is indicated by the general-purpose processor, the storage capacity required by the first accelerator.

9. The method according to any one of claims 1 to 8, wherein obtaining the storage capacity required by the first accelerator comprises:
when the first accelerator processes the compute task indicated by the general-purpose processor, obtaining the storage capacity required by the first accelerator.

10. The method according to any one of claims 1 to 9, wherein the storage resource pool comprises a plurality of types of storage media; and allocating the first storage area to the first accelerator from the storage resource pool comprises:
allocating the first storage area to the first accelerator from one type of storage medium.

11. The method according to any one of claims 1 to 10, wherein the first storage area is a storage area other than a faulty area in the storage resource pool.

12. The method according to any one of claims 1 to 11, wherein the method further comprises:
after the first accelerator completes execution of the compute task indicated by the general-purpose processor, releasing the storage area allocated to the first accelerator.

13. The method according to any one of claims 1 to 12, wherein before obtaining the storage capacity required by the first accelerator, the method further comprises:
when the dedicated processor is started, updating a default storage configuration record of the first accelerator based on a system configuration file, to obtain the storage configuration record of the first accelerator.

14. A processor, wherein the processor comprises a plurality of accelerators, a storage resource pool, and a management module, and the plurality of accelerators comprise a first accelerator;
the management module is configured to obtain a storage capacity required by the first accelerator;
the management module is further configured to allocate a first storage area to the first accelerator from the storage resource pool, wherein a storage capacity of the first storage area meets the storage capacity required by the first accelerator; and
the first accelerator is configured to accelerate a compute task indicated by a general-purpose processor, wherein the first storage area is used to store data of the compute task that is indicated by the general-purpose processor and that is accelerated by the first accelerator.

15. A computer system, wherein the computer system comprises a general-purpose processor and a dedicated processor, and when the dedicated processor executes a group of computer instructions, an operation step of the method according to any one of claims 1 to 13 is performed.
